Europäisches Patentamt

(19) European Patent Office

Office européen des brevets

(11) Publication number: **0 010 983**
**B1**

(12) **EUROPEAN PATENT SPECIFICATION**

(45) Date of publication of patent specification: **13.07.83**

(51) Int. Cl.³: **G 05 D 3/00** //H01L41/08

(21) Application number: **79302438.1**

(22) Date of filing: **05.11.79**

(54) Positioning apparatus.

(30) Priority: **06.11.78 US 958273**

(43) Date of publication of application:
**14.05.80 Bulletin 80/10**

(45) Publication of the grant of the patent:
**13.07.83 Bulletin 83/28**

(84) Designated Contracting States:
**CH DE FR GB IT NL SE**

(56) References cited:
**FR - A - 2 171 276**
**FR - A - 2 360 119**
**US - A- 4 019 073**

(73) Proprietor: **SPERRY CORPORATION**
**1290, Avenue of the Americas**
**New York, N.Y. 10019 (US)**

(72) Inventor: **Thaxter, James Bruce**
**224 Northend Road**
**Townsend Massachusetts 01469 (US)**

(74) Representative: **Michaels, Peter Albert**
**Sperry Univac Patent & Licensing Services M.S.**
**N1W4 Sperry Rand Ltd. Sperry Univac Centre**
**Brentfields**
**London NW10 8LS (GB)**

Courier Press, Leamington Spa, England

Positioning apparatus

The present invention relates to positioning apparatus, and in particular to positioning apparatus in which an article is moved by the application of voltages to piezoelectric transducers. The invention is applicable to positioning apparatus of various kinds, but one particular application which will herein be described is in the relative positioning of exposure masks and/or substrate wafers in the fabrication of microlithographically generated circuits.

In general, the known lithographic techniques for fabricating microcircuits requires the accurate alignment of the substrate wafer with respect to the exposure mask. In the past, simple mechanical, screw-type, means for aligning the mask and the wafer have been used to align the translational and rotational positions of the mask and wafer. In this type of system, however, inevitable tolerances and torques build-up which affect the alignment.

An electromechanical technique has also been proposed to overcome some of the problems of the prior art mechanical techniques. This electromechanical method for aligning the mask and substrate wafers envisions using a piezoelectric transducer coupled to the mask or wafer to displace one of them with respect to the other in response to a voltage applied to the transducer. For relatively low voltages, it is well known that the displacement of the transducer varies directly with the applied voltage, so that precise electromechanical control of the mask or wafer may be exercised by means of precise voltage control. At relatively high voltages, however, the linearity of transducer displacement with respect to voltage breaks down, and so the operating range of the transducer, and therefore the total displacement of the wafer, is limited.

It is an object of the present invention to provide positioning apparatus in which an article can be moved through small displacements without the alignment and stability problems of mechanical adjustment and through distances greater than the very limited range obtainable by the proposed piezoelectric technique referred to above.

The present invention also makes use of one or more piezoelectric transducers, but instead of these being supplied with a steady voltage corresponding to the required displacement, they are supplied with a voltage of asymmetrical waveform. The transducers are coupled through frictionally engaged surfaces to the wafer or other article to be positioned, and the waveform is such that the acceleration for part of the voltage cycle exceeds the critical acceleration so that relative movement of the frictionally engaged surfaces takes place. Each waveform cycle thus produces a net overall change in position of the article.

The voltage source may comprise a reversible DC supply which may be switched to charge and discharge the capacity of the piezoelectric device through resistors of different values, so producing different charge and discharge rates, However, a continuous cyclic supply having an asymmetric waveform may be employed, and a suitable waveform may be generated by full wave rectification of a sinusoidal alternating voltage.

A set of four transducers may be employed spaced equidistantly round a cycle and acting in directions tangential to it, and this arrangement, with suitable energisation, will enable a flat article to be translated in two axes and to rotate about a third axis at right angles to its plane.

The article support may be in the form of hollow tubes to which a vacuum source may be connected to urge the article move strongly towards the support, so that by varying the vacuum the frictional engagement between the article and the support, and so the speed of movement, may be regulated.

The invention will now be further described by way of example with reference to the accompanying drawings, in which

Figure 1 is a diagrammatic section through a positioning apparatus according to the present invention designed for aligning a substrate wafer with a mask at a stage in the manufacture of a microcircuit.

Figure 2 is a detail section showing how a piezoelectric transducer is coupled to the wafer.

Figures 3 and 4 show the use of the invention for moving a wafer along two mutually perpendicular axes and rotating it about a third axis perpendicular thereto.

Figure 5 shows waveforms used in carrying out the invention.

Figure 6 is explanatory of the method in which the wafer is moved according to the present invention, and

Figure 7 is a voltage diagram and waveforms illustrating an alternative embodiment of the invention.

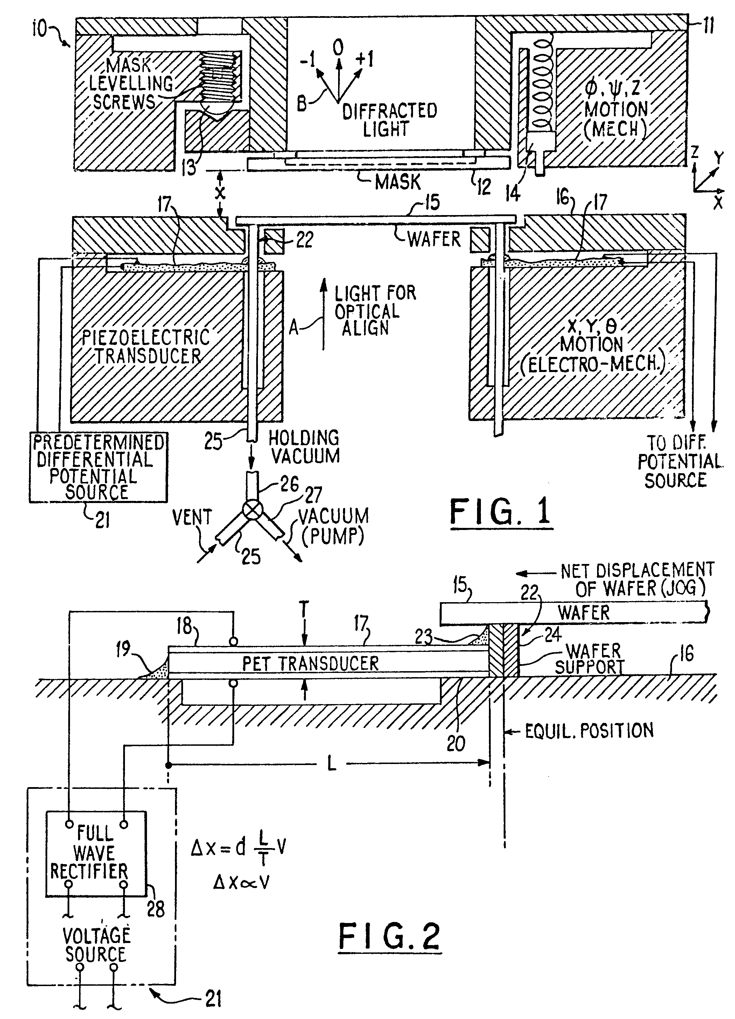

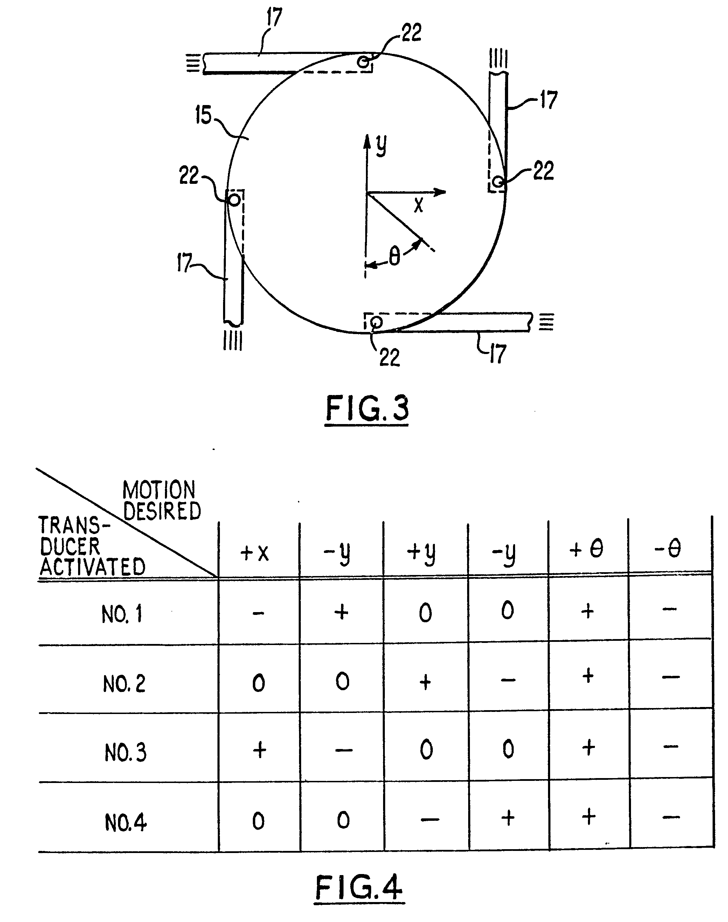

Referring to Figure 1, the present invention is shown embodied in a wafer alignment fixture utilised in lithographic techniques for multistep processing of substrates, for example wafers, via conventional optical, X-ray or electron beam processes known in the circuit-manufacturing art. The alignment fixtures 10 includes a support plate 11 to which is attached an exposure mask 12, and which is provided with levelling screws 13 and springs 14 for adjusting the exposure mask 12 with respect to a reference, or a substrate wafer 15 supported by a further base plate 16 of the alignment fixture 10. The levelling screws 13 and springs 14 allow the mask to be rotated about two mutually perpendicular axes (x, y) and to be translated, in this figure vertically, with respect to the substrate wafer 15, along a third axis (z) perpendicular to the other axes. The substrate wafer 15 can also be translated along the two mutually perpendicular axes (x, y), which are more clearly shown in Figure 3, and the wafer is also rotatable about the vertical axis (z). In general, the wafer 15 is optically aligned with the mask 12 in a conventional manner. For example, as shown in Figure 1, the wafer 15 is illuminated from below such that when viewed from a position vertically above the mask 12 a diffraction pattern resulting from grids formed on the respective mask and wafer (not shown) may be observed, as indicated by the illumination arrow A and diffraction arrow B in the Figure.

As illustrated in Figure 1, and more clearly shown in Figure 2, the substrate wafer 15 is coupled to a piezoelectric transducer 17 which, in accordance with this invention as explained hereinafter, effects the movement of the wafer. It is apparent that the mask 12 could also, or alternatively, be coupled for movement to a transducer in accordance with the invention. The piezoelectric transducer 17, in the preferred embodiment of this invention a PZT transducer, is affixed at one end 18 (Figure 2), by suitable means such as adhesive 19 to the base plate 16. The other or free end 20 is frictionally coupled by a support 22 to the substrate wafer 15. A voltage source 21 is connected across the transducer 17. As shown in Figure 1 and Figure 3, a plurality of transducers coupled to respective voltage sources (not shown in Figure 3) are utilised in accordance with this invention to affect the desired displacement and/or rotation of the substrate wafer 15 with respect to the mask 12 or any other suitable reference.

As indicated hereinabove, for applied potential differences below the breakdown voltage of the transducer the motion of the transducer may be considered as an analog motion, i.e., directly proportional to applied voltage. As shown in Figure 2, a change in length ($\Delta X$) of the transducer 17 of length (L), thickness (T), and inverse piezoelectric tensor component (d), wherein the transducer is poled normal to the electrodes, as shown, may be expressed as

$$\Delta X = d \frac{L}{T} V \qquad (1)$$

In the embodiment of the invention shown in Figures 1 and 2, the wafer 15 is coupled to the transducer 17 by a wafer support 22. The wafer support 22 of this invention is affixed, e.g. by adhesive 23 (Figure 2) to the transducer's free end 20. One embodiment of the wafer support 22 (Figure 2) may take the form of a simple column or support structure 24, or, as shown in Figure 1, the preferred embodiment of the wafer support 22 is a tubular support 25, having one end frictionally coupled to the wafer and the other end coupled via a valve 26, either to a vent 25 open to the local atmospheric pressure acting on the wafer 15, or to a conduit 27 connected to a vacuum pump.

The tubular support 25 is connected to the local ambient atmospheric pressure via vent 25 when no increased coupling of the wafer 15 to the wafer support 22 is desired. When an increased coupling force is desired, the tubular support 25 may be connected to the line 27, to increase the coupling force on the wafer at the support 22.

Figure 3 shows the wafer 15 in plan view, coupled to four piezoelectric transducers 17, in pairs at opposite ends of two diameters of the wafer 15, and acting perpendicular to these diameters. This arrangement allows translation along the x, y axes and rotation about the z axis.

Figure 4 is a table showing how the transducers need to be energised for the various modes of translation and rotation.

There are two modes of operation of this apparatus. In the first or analogue mode, as described above, the potential difference applied to the transducer determines the displacement of the wafer support 22, and therefore that of the wafer, provided the potential difference is below the breakdown voltage of the transducer. For example, for a PZT transducer with a [d] of $10^{-10}$ M/V, a displacement of about 1 $\mu$m per 100 volts is typical. In order to obtain the high area packing density of current components, wafer-mask adjustments of $\pm 0.1$ $\mu$m are required, and this accuracy is easily obtainable.

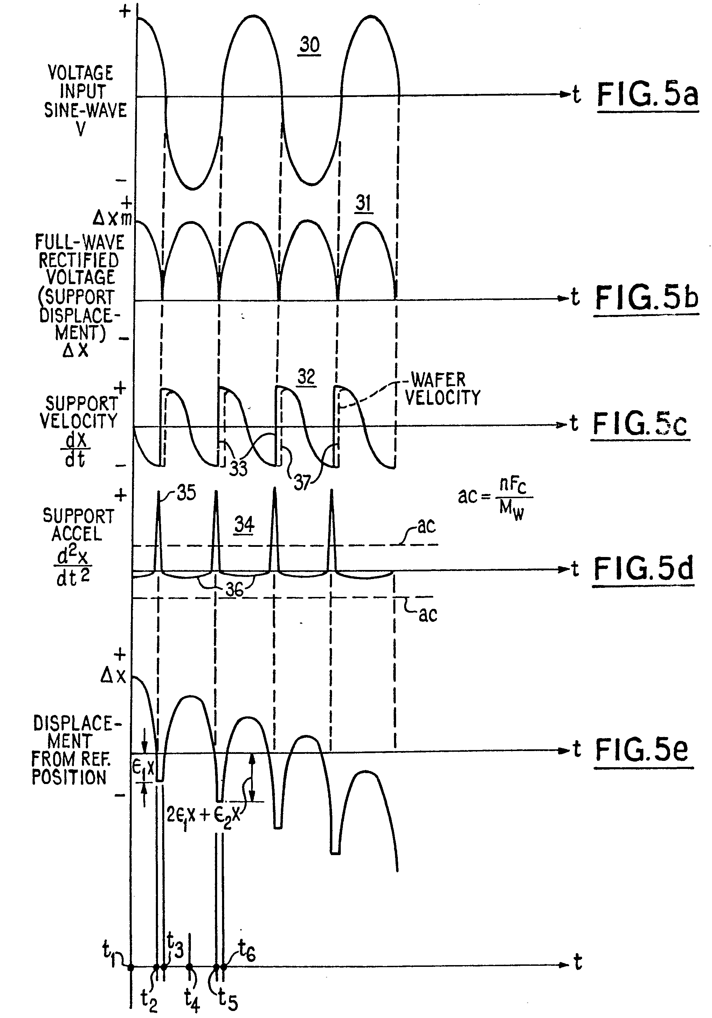

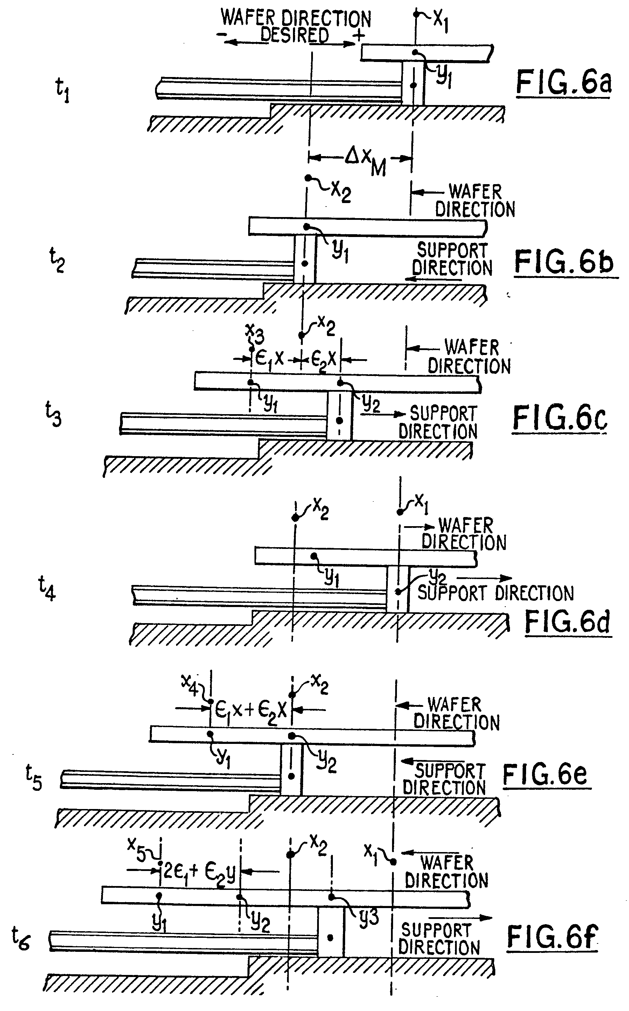

For larger movements of the wafer than can be obtained in the analogue mode, a second mode of operation is available. This involves a "jogging" motion applied to the wafer by an asymmetrical acceleration of the transducer. This will now be described with reference to Figures 5 and 6.

Figure 5a shows a sine wave voltage 30 supplied to the voltage source means 21 of Figure 2, and converted by a full-wave rectifier 28 into the full-wave rectified voltage 31 of Figure 5b. The peak potential difference of Figure 5b is less than the transducer's breakdown voltage. As equation (1) indicates, for potential differences less than the voltage of electrical breakdown of the transducer, the displacement $\Delta X$ is proportional to the applied potential difference and accordingly, the waveform of Figure 5b is proportional to, and also represents, the displacement of transducer 17 and support 22. The full-wave rectified wave form 31 (Figure 5b) provides a driving signal which causes a jogging motion of the wafer in accordance with this invention as it provides an asymmetrical acceleration, as will be described with reference to Figure 6. The motion of the support 22 and free end 20 of the transducer will follow approximately the driving voltage of Figure 5b as long as the important Fourier components of the waveform are below the mechanical resonances of the structure, which may be readily arranged. Means (not shown) is provided for reversing the polarity of the driving signal to enable the wafer to be moved in either direction.

Referring now to Figure 5c, the velocity 32 of the support 22 is proportional to the slope of the displacement $\Delta X$ of Figure 5b as shown. This velocity waveform 32 is periodic and smoothly continuous from maximum positive to maximum negative, but nearly discontinuous from maximum negative to maximum positive as shown at 33. The derivative of this velocity acceleration 34 shown in Figure 5d includes a "spike" 35 at each near-discontinuity 33 in the velocity waveform 32, and intervening portions 36 of relatively small amplitude during the smoothly continuous portions of the velocity curve 32. Since the input voltage is less than the breakdown voltage, the displacement of the transducer is proportional to the voltage, but net motion of the wafer 15 occurs because at the time of the near-discontinuity 33 the inertial force of the wafer opposing the driving force of the transducer exceeds the frictional shear force coupling the wafer 15 to the transducer 17 at the wafer support 22. That is, the critical acceleration $(a_c)$ of the wafer is exceeded by the sharp spike 35 of the asymmetrical acceleration 34 of the transducer. The critical acceleration of the wafer $(a_c)$ corresponds to the frictional coupling threshold, which may be calculated knowing the coefficient of static friction $n_s$ between the wafer 15 and the support 22, the normal coupling force $F_c$ and the mass of the wafer $M_w$. The critical acceleration may be expressed as:

$$a_c = \frac{n_s F_c}{M_w} \qquad (2)$$

The critical acceleration $a_c$ is indicated in Figure 5d where it is easily seen that the sharp acceleration spikes 35 exceed the critical acceleration of the wafer, whereas the remaining portions 36 of the acceleration curve 34 do not exceed the critical acceleration. Thus, for the input potential difference corresponding to the portion 36 of the transducer acceleration curve 34 the wafer 15 follows the transducer 17. However, for the sharp spike portion 35, slip takes place between the wafer and its support. The inertial force of the wafer moves the wafer, at this time, without regard for the motion of the transducer.

Figure 6 indicates motion of one transducer 17 (for clarity purposes) and associated wafer 15 portion at six successive time intervals.

At time $t_1$, Figures 5b and 6a indicate that the transducer 17 is at its maximum deflection, $\Delta X_m$, indicated as point $X_1$ in Figure 6a, and a movement in the negative direction is desired.

Also, at time $t_1$ the transducer velocity (Figure 5c) is zero and increasing negatively, and the transducer acceleration (Figure 5d) is at its maximum for the portion 36 of the acceleration curve. As the time interval progresses from time $t_1$ to time $t_2$ the transducer displacement (curve 31 of Figure 5b) is decreasing, the velocity (curve 32 of Figure 5c) increases to its maximum in the negative direction, and because the critical acceleration $a_c$ has not been exceeded and the voltage potential is not greater than the breakdown voltage the wafer displacement decreases lineraly (in the analogue mode fashion). At time $t_2$ the minimum deflection of the transducer is reached at the point $X_2$ (Figure 6b) corresponding to a change of $\Delta X_m$, and with the start of the next periodic wave the transducer's velocity 32 changes from maximum negative to maximum positive at the near-discontinuity 33, resulting in the acceleration spike 35. The acceleration at this point exceeds the critical acceleration $a_c$ so that the wafer starts to slip on the support, and the inertial force of the wafer causes it to continue moving in the direction indicated (negative) at approximately the negative velocity at time $t_2$, (point $X_2$, see dashed curve 37, Figure 5c). Meanwhile, the transducer and support start to move in the positive direction towards the point $X_1$. At time $t_3$ the sharp acceleration spike 35 has fallen to or below the critical acceleration $a_c$ and the wafer 15 and support 22 cease to slip at the point $Y_2$ on the wafer (Figure 6c). Thus, as shown in Figures 5e and 6c, the wafer 15 has moved to point $X_3$, a distance $\varepsilon_1 X$, negatively, equal to the wafer's negative velocity at the moment the transducer breaks free times the time interval, $(t_3-t_2)$, while the support 22 has moved in the positive direction from the initial attachment point $Y_1$ a distance equal to the transducer's positive decreasing velocity 32 (Figure 5b) times the time interval $(t_3-t_2)$ to the new attachment point $Y_2$. At time $t_4$ the maximum voltage of waveform 31 is reached corresponding to the maximum deflection of the transducer 17 and the support 22, back to the point $X_1$, point $Y_2$ of the wafer having moved to the initial point $X_1$. From time $t_3$ to $t_4$ the acceleration lies along the curve 36 below the critical acceleration, and therefore the motion of the wafer follows the transducer. From time $t_4$ to time $t_5$ the velocity of the transducer is again increasingly negative and deflection towards the minimum is initiated. At time $t_5$ the minimum deflection of the transducer again occurs equal to the minimum deflection at time $t_2$, i.e., $\Delta X_m$. It is noted, however that the deflection of the wafer point $Y_1$ is now equal to $(\Delta X_m + \varepsilon_1 X + \varepsilon_2 X)$, point $X_4$, Figure 6c, negatively. Again, for another period of waveform 31 the critical acceleration is exceeded, the wafer-transducer support frictional coupling is overcome, the wafer continues negatively at its negative velocity times the time interval

$(t_5—t_6)$ for a distance equal to $\varepsilon_1 X$ again, and the wafer support moves positively in accordance with the velocity curve 32 a distance equal to $\varepsilon_2 X$ to a new attachment point $Y_3$, as shown in Figure 5e and 6f. Thus, the positive value full wave rectified voltage 31 displaces the wafer 15 in the negative direction in a "jogging" fashion, i.e., increasing then decreasing, such that the net displacement for a given time period or set of pulses exceeds the maximum displacement obtainable by the transducer 17 in the analogue mode of operation.

Referring back to Figures 3 and 4, motion of the wafer 15 along the x and y axes or rotation about the z axis may be obtained by positive or negative full wave rectified voltage inputs to suitably chosen transducers. For example, if the desired wafer motion is along the +y axis, transducers #1 and #3 are not activated, as represented by a "0", and transducers #2 and #4 are activated as represented by a "+", positively and "−", negatively, respectively.

As indicated above in equation (2), the wafer critical acceleration $a_c$ is a function of the normal coupling force $F_c$, or the frictional coupling. Therefore, the tubular support 25 of Figure 1 may be coupled to a vacuum or low pressure, relative to the local wafer atmospheric pressure, via the valve 26, which may be an electrically controlled valve, in order to adjust the coupling force.

The invention enables an object such as a wafer 15 to be moved through a distance greater than the maximum movement of a transducer attached to it.

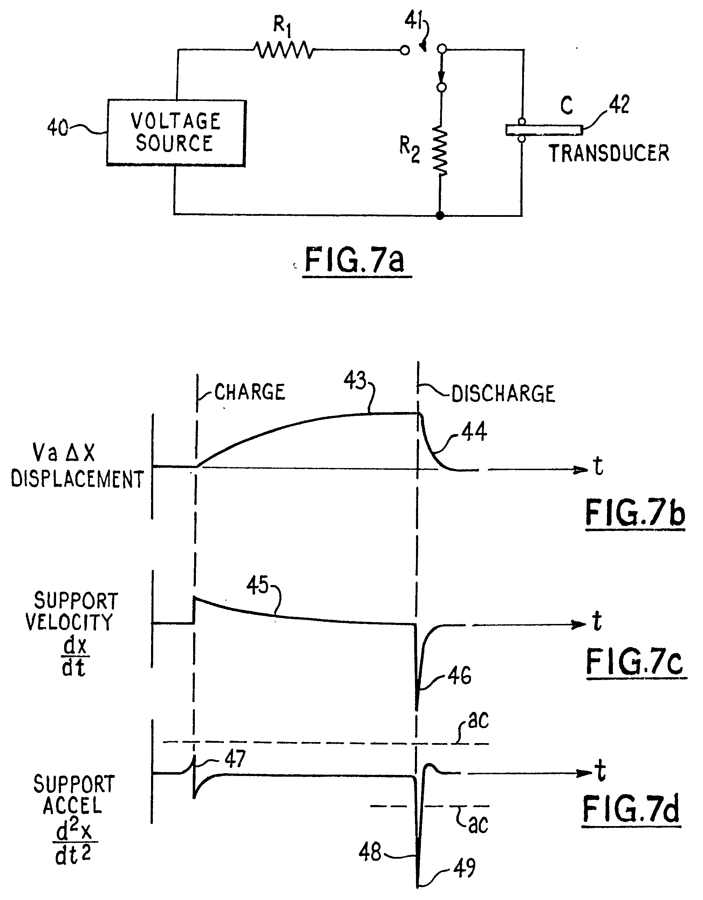

A further embodiment of this invention is shown in Figure 7a, and will be described with reference to the waveforms in Figures 7b to 7d. In this embodiment the jogging action is performed by means of one or more single pulses.

The apparatus of Figure 7a includes a reversible D.C. voltage source 40 coupled to a transducer 42 of capacitance C by a switch 41, which may be an electronic switch , through a first resistor R1, through which the transducer is charged. The switch 41 than disconnects the voltage source 40 and resistor R1 from the transducer 42 and discharges the transducer through a second resistor R2.

As shown in Figure 7b, the charging voltage curve 43 of the RC circuit is chosen to be significantly different from the voltage curve 44 during discharge of the transducer 42 by appropriately choosing the values of $R_1$ and $R_2$. Figures 7c and 7d respectively show the velocity and acceleration curves; the voltage waveforms 43 and 44 result in an asymmetrical velocity 45, 46 and, more importantly, an asymmetrical acceleration 47, 48 wherein a sharp "spike" 49 significantly greater than the critical acceleration $a_c$ is obtainable. In this embodiment the wafer moves as explained above, and follows the single pulse charging voltage 45.

Use of piezoelectric transducers in this invention serves to provide precise electromechanical control of the wafer 15, thereby eliminating the need for applying extraneous torques to the wafer as in the prior art. Piezoelectric transducers are advantageous in providing electrical control of the position of the wafer 15 by means of direct coupling thereto without intervening means such as motors, gears or levers.

## Claims

1. Positioning apparatus in which an article (15) is coupled to at least one piezoelectric transducer (17) so as to be movable through a small displacement by applying a voltage from a voltage source (21) to the piezoelectric transducer (17), characterised in that the coupling includes a pair of frictionally-engaged surfaces (15, 22) and the voltage source (21) supplies a voltage of asymmetric waveform (Figure 5b) such that the acceleration at the frictionally-engaged surfaces exceeds the critical acceleration for part of the waveform, thereby causing net relative motion of the surfaces.

2. Positioning apparatus according to claim 1 in which the voltage source includes a source (40) of reversible DC voltage, and a switch (41) arranged to charge the transducer (42) through a first resistor (R1) and to discharge it through a second resistor (R2), the resistors being such as to produce a substantial difference between the rates of charge and discharge.

3. Positioning apparatus according to claim 1 further characterised in that the voltage source comprises a source (21) of full-wave rectified AC current.

4. Positioning apparatus according to any preceding claim characterised in that it includes four piezoelectric transducers arranged symmetrically around a circle, and having their directions of movement tangential to the circle (Figure 3) each transducer being capable of being energised independently from a voltage source (21), so that by suitably energising the transducers the article may be translated in either of two mutually perpendicular directions parallel to the plane of the circle, or may be rotated about an axis perpendicular thereto.

5. Apparatus according to any preceding claim characterised in that article (15) rests in frictional engagement on a tubular support (22) and means (26) is provided for connecting the tubular support to a vacuum source so that, by varying the vacuum applied to the support, the pressure of frictional engagement may be varied.

6. Apparatus according to any preceding claim further characterised in that the article (15) is a wafer to be etched by a photo-lithographic process and the transducers (17) are so disposed as to enable the wafer to be accurately aligned in relation to an exposure mask (12).

## Revendications

1. Dispositif de commande de position dans lequel un objet (15) est couplé à au moins un transducteur piézoélectrique (17) de façon à pouvoir être déplacé sur une courte distance en appliquant une tension d'une source électrique (21) au transducteur piézoélectrique (17), caractérisé en ce que le couplage inclut deux surfaces s'appliquant à friction (15, 22) et en ce que la source électrique (21) fournit une tension ayant une forme asymétrique (figure 5b) de sorte que l'accélération entre les surfaces s'appliquant à friction dépasse l'accélération critique sur une partie de la forme d'onde, provoquant ainsi un mouvement relatif résultant entre les surfaces.

2. Dispositif de commande de position selon la revendication 1, dans lequel la source électrique comprend une source (40) de tension continue réversible et un commutateur (41) arrangé pour charger le transducteur (42) à travers une première résistance (R1) et pour le décharger à travers une seconde résistance (R2), ces résistances étant calculées pour produire une différence sensible entre les vitesses de charge et de décharge.

3. Dispositif de commande de position selon la revendication 1, caractérisé en outre en ce que la source électrique est une source (21) de courant alternatif redressé pleine-onde.

4. Dispositif de commande de position selon l'une quelconque des revendications précédentes, caractérisé en ce qu'il comprend quatre transducteurs piézoélectriques disposés symétriquement le long d'un cercle et dont les directions de mouvement sont tangentielles à ce cercle (figure 3), chaque transducteur pouvant être excité séparément par une source électrique (21), de sorte qu'en excitant convenablement les transducteurs, ou peut imprimer à l'objet un mouvement de translation dans deux directions mutuellement perpendiculaires parallèles au plan du cercle ou bien on peut le faire tourner autour d'un axe perpendiculaire à ceux-ci.

5. Appareil selon l'une quelconque des revendications précédentes, caractérisé en ce que l'objet (15) repose par un contact à friction sur un support tubulaire (22) et en ce que des moyens (26) sont prévus pour relier ce support tubulaire à une source de vide de sorte qu'en faisant varier le vide appliqué au support, la pression du contact de friction peut être modifiée.

6. Appareil selon l'une quelconque des revendications précédentes, caractérisé en outre en ce que l'objet (15) est une plaquette devant être décapée par un procédé photolithographique et en ce que les transducteurs (17) sont disposés de manière à permettre d'aligner la plaquette avec précision par rapport à un masque d'exposition (12).

## Patentansprüche

1. Positioniergerät, bei dem ein Gegenstand (15) zwecks Bewegung längs einer kurzen Strecke mit zumindest einem piezoeletrischen Wandler (17) gekoppelt ist, dem eine Spannung aus einer Spannungsquelle (21) zugeführt wird, dadurch gekennzeichnet, daß die Kopplung über zwei in Reibungseingriff stehende Flächen (15, 22) erfolgt und die Spannungsquelle (21) eine Spannung von einem derartigen asymmetrischen Verlauf (Figur 5b) liefert, daß die Beschleunigung an den unter Reibungseingriff stehenden Flächen während eines Teiles des Spannungsverlaufes die kritische Beschleunigung übersteigt, wodurch eine nutzbare Relativbewegung zwischen den Flächen entsteht.

2. Positioniergerät gemäß dem Anspruch 1, bei cem die Spannungsquelle eine eine Umkehrbare Gleichspannung liefernde Quelle (40) enthält und ein Schalter (41) derart angeordnet ist, daß der Wandler (42) über einen festen Widerstand (R1) aufgeladen und über einen zweiten Widerstand ($R_2$) entladen wird, und daß die Widerstände so bemessen sind, daß eine wesentliche Differenz zwischen den Lade- und Entladegeschwindigkeiten zustandekommt.

3. Positioniergerät nach dem Anspruch 1, ferner dadurch gekennzeichnet, daß die Spannungsquelle eine Quelle (21) eines einer Vollweggleichrichtung unterliegenden Wechselstromes enthält.

4. Positioniergerät nach einem vorhergehenden Anspruch, dadurch gekennzeichnet, daß es vier auf einem Kreis symmetrisch angeordnete piezoelektrische Wandler aufweist, deren Bewegungsrichtungen tangential zum Kreis (Figur 3) liegen, und von denen jeder unabhängig von einer Spannungsquelle (21) erregbar ist, und daß durch eine passende Erregung der Wandler der Gegenstand in jeder von zwei zueinander senkrechten Richtungen parallel zur Ebene des Kreises verschoben oder um eine dazu senkrechte Achse gedreht werden kann.

5. Positioniergerät nach einem vorhergehenden Anspruch, dadurch gekennzeichnet, daß der Gegenstand (15) auf einer röhrenförmigen Unterlage (22) in Reibungseingriff ruht, und daß Hilfsmittel (26) zum Anschluß der röhrenförmigen Unterlage an eine Unterdruckquelle vorgesehen sind, so daß durch eine Änderung des der Unterlage zugeführten Unterdruckes der Druck des Reibungseingriffes abgeändert werden kann.

6. Positioniergerät nach einem vorhergehenden Anspruch, dadurch gekennzeichnet, daß der Gegenstand (15) eine durch einen photo-lithographischen Prozeß zu ätzende Scheibe ist und die Wandler (17) so angeordnet sind, daß die Scheibe genau auf eine der Belichtung dienende Blende (12) ausgerichtet werden kann.



0010983

FIG. 1

FIG. 2

$$\Delta x = d \frac{L}{T} V$$

$$\Delta x \propto V$$

## FIG.3

| TRANS-DUCER ACTIVATED | MOTION DESIRED | | | | | |
|---|---|---|---|---|---|---|
| | +x | -y | +y | -y | +θ | -θ |
| NO. 1 | − | + | 0 | 0 | + | − |
| NO. 2 | 0 | 0 | + | − | + | − |
| NO.3 | + | − | 0 | 0 | + | − |
| NO.4 | 0 | 0 | − | + | + | − |

## FIG.4

2

**0010983**

FIG.5a — VOLTAGE INPUT SINE-WAVE V — 30

FIG.5b — FULL-WAVE RECTIFIED VOLTAGE (SUPPORT DISPLACEMENT) $\Delta X$ — $\Delta X m$ — 31

FIG.5c — SUPPORT VELOCITY $\frac{dX}{dt}$ — 32 — WAFER VELOCITY — 33 — 37

FIG.5d — SUPPORT ACCEL $\frac{d^2X}{dt^2}$ — 35 — 34 — 36 — $ac = \frac{nF_C}{M_W}$ — ac — ac

FIG.5e — DISPLACEMENT FROM REF. POSITION — $\Delta X$ — $\epsilon_1 X$ — $2\epsilon_1 X + \epsilon_2 X$

$t_1$ $t_2$ $t_3$ $t_4$ $t_5$ $t_6$

3

0010 983

FIG.6a
FIG.6b
FIG.6c
FIG.6d
FIG.6e
FIG.6f

0010983

**FIG.7a**

VOLTAGE
SOURCE

R$_1$

41

C

42

TRANSDUCER

R$_2$

40

CHARGE

43

DISCHARGE

44

Va ΔX
DISPLACEMENT

t

**FIG.7b**

SUPPORT
VELOCITY
$\frac{dx}{dt}$

45

46

t

**FIG.7c**

SUPPORT
ACCEL
$\frac{d^2x}{dt^2}$

ac

47

48

49

ac

t

**FIG.7d**